# EUROPÄISCHE PATENTSCHRIFT

(11) **EP 0 664 724 B1**
(45) Veröffentlichungstag und Bekanntmachung des Hinweises auf die Patenterteilung: **13.03.1996**
(21) Anmeldenummer: 93923461.3
(22) Anmeldetag: 13.10.1993
(51) Int. Cl.: B01D 15/08, G01N 30/96, B01D 61/24

(54) **VERFAHREN FÜR DIE GEWINNUNG UND DIE UMPUFFERUNG UND/ODER EINENGUNG VON GELÖSTEN MAKROMOLEKÜLEN EINES MAKROMOLEKÜLGEMISCHES**
PROCESS FOR EXTRACTING AND REBUFFERING AND/OR CONCENTRATING DISSOLVED MACROMOLECULES OF A MACROMOLECULAR MIXTURE
PROCEDE DE PREPARATION ET DE RETAMPONNAGE ET/OU DE CONCENTRATION DE MACROMOLECULES DISSOUTES D'UN MELANGE MACROMOLECULAIRE

(30) Priorität: 15.10.1992 DE 4234728
(43) Veröffentlichungstag der Anmeldung: 02.08.1995
(73) Patentinhaber: BARTHOLMES, Peter, D-58456 Witten (DE); KAUFMANN, Michael, D-44388 Dortmund (DE); SCHWARZ, Thomas Rolf, D-42799 Leichlingen (DE)
(72) Erfinder: BARTHOLMES, Peter, D-58456 Witten (DE); KAUFMANN, Michael, D-44388 Dortmund (DE); SCHWARZ, Thomas Rolf, D-42799 Leichlingen (DE)
(74) Vertreter: Behrendt, Arne, Dipl.-Ing.
(86) Internationale Anmeldenummer: EP9302827
(87) Internationale Veröffentlichungsnummer: WO9408684

(56) Entgegenhaltungen:
- EP-A- 0 348 508
- DE-A- 2 724 918
- US-A- 4 195 073
- US-A- 4 794 088
- DATABASE WPI Week 1815, Derwent Publications Ltd., London, GB; AN 78-27430A & JP,A,50 160 474 (TOWA CHEM) 25. Dezember 1975

## Beschreibung

Die Erfindung betrifft eine Vorrichtung für die Gewinnung und die Umpufferung und/oder Einengung von gelösten Makromolekülen eines Makromolekülgemisches, bestehend aus einer Flüssigchromatographieanlage und mindestens einem in der Abströmleitung der Flüssigchromatographieanlage angeordneten Hohlfasermembranmodul.

Zum Standardrepertoire biochemischen Arbeitens gehören die verschiedenen chromatographischen Methoden, bei denen die unterschiedliche Masse, Form, Affinität, Ladung oder Polarität der Moleküle zur Trennung ausgenutzt wird. Flüssigchromatographieanlagen werden bei der Ionenaustauscher-, Gelfiltrations- oder Affinitätschromatographie verwendet, um Makromolekülgemische in ihre einzelnen Bestandteile zu trennen.

Das Eluat einer Flüssigchromatographieanlage enthält über die einzelnen Bestandteile des Makromolekülgemisches hinaus niedermolekulare Substanzen, beispielsweise Salze, die zur Aufhebung der Interaktionen zwischen den Makromolekülen und der stationären Phase der Chromatographiesäule verwendet wurden. Diese Substanzen müssen nach der Chromatographie dem Eluat entzogen werden, da sie beispielsweise bei der nachgeschalteten Detektion oder bei der weiteren Behandlung stören können und daher in den Präparationen unerwünscht sind.

Zur Entfernung der niedermolekularen Bestandteile aus dem Eluat der Flüssigchromatographieanlage sowie zum Austausch der das Makromolekülgemisch enthaltenden Pufferlösung wird in der präparativen Biochemie die sogenannte "diskontinuierliche Gleichgewichtdialyse" angewandt. Bei diesem Verfahren wird das Eluat mit den darin enthaltenen Molekülspezies in einen Dialyseschlauch eingefüllt, der an beiden Enden mittels Klammern verschlossen wird. Die Wände des Dialyseschlauchs bestehen aus einer semipermeablen Membran, die niedermolekulare Substanzen, beispielsweise Wasser oder Salze, durchläßt, während Makromoleküle zurückgehalten werden. So können die im Eluat enthaltenen Elektrolyte oder andere niedermolekulare Substanzen durch die Membran diffundieren, bis das osmotische Gleichgewicht erreicht wird. Man läßt den mit Eluat gefüllten Dialyseschlauch mehrere Stunden lang in einem Gefäß schwimmen, das ein großes Volumen Wasser bzw. Pufferlösung enthält. Bei ausreichend häufigem Auswechseln der Außenflüssigkeit können die niedermolekularen Bestandteile vollständig entzogen werden bzw. die Pufferlösung ausgetauscht werden.

Bei der Auftrennung von Makromolekülen nach ihrer Größe mittels Gelfiltration stellt sich weniger das oben erläuterte Problem einer Verunreinigung der Präparation mit unerwünschten niedermolekularen Verbindungen; vielmehr werden die Makromoleküle bei der Elution aus der Chromatographiesäule stark verdünnt. Dieses Problem tritt auch häufig bei anderen chromatographischen Trennverfahren auf. Zur Einengung des Eluats werden dann als Dialyseflüssigkeit konzentrierte Lösungen hochmolekularer Substanzen (beispielsweise Polyethylenglykol) eingesetzt, die eine hohe Affinität zu Wasser aufweisen, der makromolekularen Lösung Wasser entziehen und durch die Dialysemembran nicht diffundieren können.

Das geschilderte Vorgehen ist umständlich und erfordert einen erheblichen zeitlichen und apparativen Aufwand. Insbesondere wenn zur Trennung der einzelnen Makromolekülspezies das Eluat auf eine Vielzahl von einzelnen Behältern aufgeteilt wird (Fraktionierung), erweist sich das Verfahren als nahezu unpraktikabel. Die bei dieser Verfahrensweise unvermeidlichen Zeitverzögerungen sind besonders dann nachteilig, wenn die empfindlichen Makromoleküle zu lange in einer ungeeigneten Pufferlösung verbleiben. Dieses Problem stellt sich häufig bei enzymatischen Präparationen: oft ist das Enzym so labil, daß die aufwendigen Verfahrensschritte bei der Umpufferung und/oder Einengung durch Dialyse zu großen Verlusten an der enzymatischen Aktivität des Präparates führen.

Es ist aus der EP-B1-00 58 168 eine Vorrichtung bekannt, bei der im Anschluß an die Flüssigchromatographieanlage ein Hohlfasermembranreaktor eingesetzt wird. In diesem Hohlfasermembranreaktor wird das Eluat der Flüssigchromatographieanlage mit Reagenzien behandelt, die zum Zwecke einer besseren und schnelleren Analyse mit Bestandteilsgruppen der Proben und/oder des Fließmittels reagieren sollen.

Diese Vorrichtung ist für die Gewinnung von biochemischen Präparaten nicht geeignet. Insbesondere die Gewinnung von Präparaten, die labile Makromoleküle enthalten, erweist sich mit dieser Vorrichtung als sehr problematisch, da während der Zeit, die zum vollständigen Entzug der niedermolekularen Bestandteile aus dem Eluat benötigt wird, die Makromoleküle in der Pufferlösung verweilen müssen, was zu erheblichen Verlusten der Aktivität des Präparates führen könnte. Weiterhin wird durch die zu lange Verweilzeit der Makromoleküle im Reaktor bewirkt, daß die mittels Flüssigchromatographie getrennten Makromoleküle in der Pufferlösung wieder zusammendiffundieren können. Dieses ist sowohl bei der präparativen Gewinnung von Makromolekülen als insbesondere auch bei der analytischen Trennung derselben von erheblichem Nachteil.

Darüber hinaus sind aus der US-A-4 794 088 ein Verfahren und eine Vorrichtung bekannt, mittels derer eine Probe, die Bestandteile von niedrigem und mittlerem Molekulargewicht enthält, sowohl analysiert als auch mit Hilfe der Flüssigchromatographie in diese Bestandteile aufgetrennt wird. Bei der hier offenbarten Hohlfasermembran handelt es sich um eine Ionen-Austauschmembran, die besonders durchlässig für Elektrolyte ist. Ihre Permeabilität für Verbindungen, die keine Elektrolyte sind (beispielsweise niedermolekulare Kohlenhydrate wie Saccharose) ist jedoch sehr gering. Aus diesem Grund ist die Membran zum Austausch von Pufferlösungen, die solche Verbindungen enthalten, nicht geeignet.

Auch Hohlfasermembranmodule, wie sie in der Dialysetechnik für die Nierendialyse üblich sind, eignen sich nicht zur Umpufferung und/oder Einengung des Eluats einer Flüssigchromatographieanlage, welches die getrennten Makromoleküle in einer bestimmten Reihenfolge enthält. Solche Hohlfasermembranmodule enthalten zahlreiche (bis zu 8.000) verhältnismäßig kurze (200 bis 300 mm) Hohlfasern. Der Quotient aus der Anzahl der Hohlfasern und der Hohlfaserlänge liegt hier also bei 27 bis 40 mm⁻¹. Ziel ist es dabei, eine möglichst große Fläche für die Diffusion der im Blut enthaltenen niedermolekularen Substanzen (Stoffwechselprodukte wie Harnstoff, Harnsäure, Ionen u.a.) in die Dialyseflüssigkeit zur Verfügung zu stellen und für eine gleichmäßige Blutverteilung auf die Vielzahl der Hohlfasern zu sorgen. Die Anwendung eines solchen Moduls bei der Gewinnung und Umpufferung und/oder Einengung eines Eluats aus einer Flüssigchromatographieanlage hätte zur Folge, daß die durch die Flüssigchromatographie getrennten Makromoleküle gleichmäßig auf die Vielzahl der Hohlfasern verteilt würden und die vorhandene Trennung dadurch ganz oder teilweise aufgehoben wurde. Die Verwendung eines solchen Hohlfasermembranmoduls für den in der Erfindung angestrebten Zweck wäre also im Prinzip unvorteilhaft.

Aufgabe der Erfindung ist es, die Vorrichtung der gattungsgemäßen Art dahingehend weiterzubilden, daß die Verweilzeiten der Makromolekülespezies in der Pufferlösung wesentlich verkürzt werden und die Umpufferung und/oder Einengung der Pufferlösung kontinuierlich durchgeführt und der apparative Aufwand verringert wird, ohne daß die durch Flüssigchromatographie erreichte Trennung der Makromoleküle dadurch ganz oder teilweise wieder aufgehoben wird.

Die Aufgabe wird ausgehend von der Vorrichtung nach dem Gattungsbegriff erfindungsgemäß dadurch gelöst, daß das Hohlfasermembranmodul Hohlfasern aus semipermeablen Membranen enthält, die für Makromoleküle undurchlässig sind aber kleine Moleküle durchlassen, und daß der Quotient aus der Anzahl dieser Hohlfasern und der effektiven Hohlfaserlänge den Wert 0,5 mm⁻¹ und der Innendurchmesser einer Hohlfaser den Wert 0,25 mm nicht überschreiten.

Im Vergleich zu den Hohlfasermembranmodulen für die Nierendialyse sind die Hohlfasern des erfindungsgemäßen Hohlfasermembranmoduls deutlich länger und ihre Anzahl viel niedriger, was bewirkt, daß die mittels Flüssigchromatographie aufgetrennten Makromoleküle bei der Aufteilung auf die verschiedenen Hohlfasern des Hohlfasermembranmoduls nicht unzulässig vermischt werden. Die vorgeschriebene Innendurchmesser-Obergrenze der einzelnen Hohlfasern verhindert darüber hinaus, daß sich die aufgetrennten Makromoleküle bei der Durchströmung der einzelnen Hohlfasern vermischen.

Die Vorrichtung gemäß der Erfindung hat den Vorteil, daß bei ihrem Einsatz die Einengung und/oder die Umpufferung zeitgleich mit der Chromatographie erfolgt, und zwar für das gesamte Eluat quasi "on line", in ein und demselben Verfahrensschritt.

Gegenstand der Erfindung ist weiterhin ein Verfahren für die Gewinnung und die Umpufferung und/oder Einengung von gelösten Makromolekülen eines Makromolekülgemisches unter Verwendung der oben erläuterten Vorrichtung, bei dem der Entzug und/oder der Austausch der Pufferlösung kontinuierlich erfolgt, indem die Hohlfasern des Hohlfasermembranmoduls vom Eluat aus der Flüssigchromatographieanlage durchströmt und im Gegenstrom von in Lösungsmitteln gelösten niedermolekularen Substanzen umspült werden.

Das Verfahren gemäß der Erfindung hat den Vorteil, daß die Einengung und/oder die Umpufferung sehr frühzeitig unmittelbar im Anschluß an die sequentielle Trennung in der Flüssigchromatographieanlage und kontinuierlich erfolgt, und zwar für das gesamte Eluat in ein und demselben Verfahrensschritt der Gegenstrom-Dialyse. Hierdurch wird das Verfahren zur Einengung und/oder Umpufferung erheblich beschleunigt und kann in einem einzigen Aggregat erfolgen, nämlich in einer für die Gegenstrom-Dialyse geeigneten Hohlfasermembran. Infolgedessen reduziert sich bei Anwendung des Verfahrens gemäß der Erfindung auch der erforderliche apparative Aufwand erheblich.

Eine besonders vorteilhafte Weiterbildung des Verfahrens gemäß der Erfindung sieht vor, daß das im Gegenstrom zum Eluat geführte Lösungsmittel spezifische niedermolekulares Substrate für die enzymatische Detektion enthält. Hierdurch ist es möglich, in ein und demselben Verfahrensschritt Information über die in der Sequenz des Eluats enthaltenen Makromolekülspezies zu erhalten. Bei dieser enzymatischen Detektion kommt es ebenfalls nicht zu einer Reaktion mit den zu untersuchenden makromolekularen Substanzen, die unbeschadet in das zu gewinnende Präparat gelangen sollen.

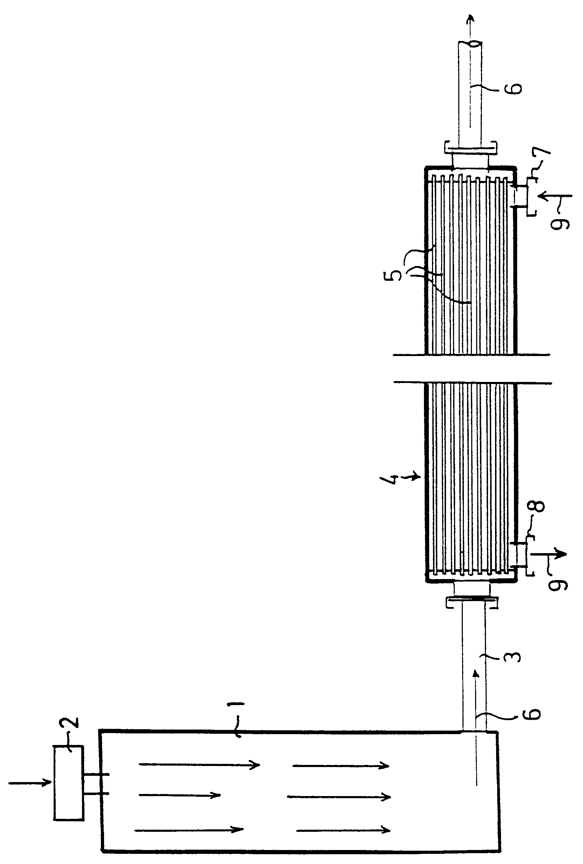

Drei Ausführungsbeispiele der Erfindung werden im folgenden anhand der Zeichnung näher erläutert, die schematisch den Aufbau einer Flüssigchromatographieanlage mit nachgeschaltetem Hohlfasermembranmodul zeigt.

In der Zeichnung ist die Flüssigchromatographieanlage in ihrer Gesamtheit mit dem Bezugszeichen 1 bezeichnet. Die Flüssigchromatographieanlage 1 weist oben einen Einlauf 2 und unten eine Auslauf 3 auf. In den Einlauf 2 wird das mit einer geeigneten Pufferlösung versetzte zu trennende Gemisch von makromolekularen Substanzen, z. B. eine Körperflüssigkeit, eingegeben. Im Inneren der Flüssigchromatographieanlage 1 werden die in dem durchfließenden Gemisch vorhandenen Makromolekülspezies in bekannter Weise sequentiell versetzt und dabei eventuell verdünnt und/oder mit niedermolekularen Substanzen vermischt. Am Auslauf 3 treten die verschiedenen Makromolekülspezies in zeitlich versetzter Form, d.h. sequentiell aus. Das am Ausfluß 3 austretende Eluat enthält allerdings noch die zuvor oder während der Trennung zugesetzten Pufferlösungen, die für die zu gewinnenden Präparate unerwünscht oder sogar schädlich sind.

Um dem Eluat die unerwünschten oder sogar schädlichen Substanzen der Pufferlösung zu entziehen oder zu ersetzen, ist an den Ausfluß 3 der Flüssigchromatographieanlage 1 ein Hohlfasermembranmodul 4 angeschlossen, in welchem der Entzug und/oder der Austausch von Pufferlösungen durch eine Gegenstrom-Dialyse vorgenommen wird.

Dieses Hohlfasermembranmodul ist in seinem Inneren mit einer Vielzahl von Hohlfasern 5 versehen, die semipermeabel, d.h. nur für niedermolekulare Substanzen durchlässig, für makromolekulare Substanzen indessen undurchlässig sind. Die Hohlräume dieser Hohlfasern 5 werden von dem Eluat der Flüssigchromatographieanlage 1 in Richtung der Pfeile 6 durchströmt. Gleichzeitig werden die Hohlfasern 5 über ihre gesamte Länge in Gegenrichtung zu den Pfeilen 6 von einer Dialyse-Flüssigkeit umspült, deren Zusammensetzung es gestattet, die durch im Eluat befindlichen Pufferlösungen gezielt zu beeinflussen, d.h. entweder zu entziehen oder zu ersetzen. Gegebenenfalls kann die Dialyse-Flüssigkeits auch spezifische niedermolekulare Substrate für die enzymatische Detektion enthalten.

Um einen ausreichenden Kontakt zwischen dem die Hohlfasern 5 durchströmenden Eluat und der im Gegenstrom geführten Dialyse-Flüssigkeit herzustellen, aber gleichzeitig die Aufhebung der durch die Flüssigchromatographie erreichten Trennung der Makromoleküle zu vermeiden, ist beim Hohlfasermembranmodul gemäß der Erfindung vorgesehen, daß einerseits der Quotient aus der Anzahl der Hohlfasern 5 und der wirksamen Länge der Hohlfasern kleiner als 0,5 mm⁻¹ und andererseits der Innendurchmesser jeder Hohlfaser kleiner als 0,25 mm ist.

Die Dialyse-Flüssigkeit wird durch die Gehäuseanschlüsse 7 und 8 in das Hohlfasermembranmodul eingegeben. Die Strömungsrichtung ist durch die Pfeile 9 gekennzeichnet.

Sämtliche Anschlüsse des Hohlfasermembranmodules 4 können als schnell lösbare Steck- oder Schraubanschlüsse ausgebildet sein. Hierdurch ist es möglich, das Modul 4 schnell auszuwechseln und durch ein anderes zu ersetzen oder gegebenenfalls mehrere Module 4 in geeigneter Weise miteinander zu verschalten.

Das Verfahren gemäß der Erfindung wird im folgenden anhand von drei konkreten Ausführungsbeispielen erläutert, von denen das erste sich auf eine Einengung der die Makromoleküle enthaltenden Pufferlösung, das zweite auf eine Umpufferung und das dritte auf eine zusätzliche enzymatische Detektion bezieht:

### Beispiel 1:

Ein Gemisch aus biologischen Makromolekülen, z.B. Zellrohextrakt wird durch Gelfiltration z.B. mittels Sephracryl S-2000 HR chromatographisch aufgetrennt. Die dabei durch das Trennprinzip unvermeidliche Verdünnung der Probelösung wird durch Konzentrierung mittels eines nachgeschalteten Hohlfasermembranmoduls wieder rückgängig gemacht. Es wird eine 20%ige wässrige, hygroskopische Polyethylenglykollösung (MG=20.000) zur Gegenspülung verwendet. Dadurch wird dem Eluat über die semipermeable Membran Pufferlösung entzogen und somit die Aufkonzentrierung der Makromoleküle bewirkt.

### Beispiel 2:

Ein Gemisch aus biologischen Makromolekülen z.B. Blutplasma wird durch kovalente Chromatographie z.B. mittels Thiol-Sepharose chromatographisch aufgetrennt. Ein nachgeschaltetes Hohlfasermembranmodul kann dann die für die Trennung notwendigerweise dem Eluat zugefügten Substanzen wie z.B. β-Mercaptoethanol und 2-Thiopyridyl-Gruppen, die eine nachfolgende optische Proteindetektion unmöglich machen, wieder entfernen. Zur Gegenspülung wird dabei z.B. physiologische Kochsalzpufferlösung verwendet.

### Beispiel 3:

Das im Beispiel 1 oder 2 aufgeführte Experiment wird derart ergänzt, daß dem Hohlfasermembranmodul ein zweites in Serie nachgeschaltet wird. Hier wird im Gegenstrom z. B. NADH und Pyruvat in die Pufferlösung eindialysiert. Nach der Passage des Moduls kann dann im Eluat das Enzym Lactatdehydrogenase photometrisch z.B. bei 340 nm über den Verlust von NADH, der bei der enzymatischen Umsetzung von Pyruvat zu Lactat durch Lactatdehydrogenase auftritt, nachgewiesen werden.

## Patentansprüche

1. Vorrichtung für die Gewinnung und die Umpufferung und/oder Einengung von gelösten Makromolekülen eines Makromolekülgemisches, bestehend aus einer Flüssigchromatographieanlage und mindestens einem in der Abströmleitung der Flüssigchromatographieanlage angeordneten Hohlfasermembranmodul,
**dadurch gekennzeichnet**,
daß das Hohlfasermembranmodul Hohlfasern aus semipermeablen Membranen enthält, die für Makromoleküle undurchlässig sind aber kleine Moleküle durchlassen, und daß der Quotient aus der Anzahl dieser Hohlfasern und der effektiven Hohlfaserlänge den Wert 0,5 mm⁻¹ und der Innendurchmesser einer Hohlfaser den Wert 0,25 mm nicht überschreiten.

2. Verfahren für die Gewinnung und die Umpufferung und/oder Einengung von gelösten Makromolekülen eines Makromolekülgemisches unter Verwendung einer Vorrichtung nach Anspruch 1, dadurch gekennzeichnet, daß der Entzug und/oder der Austausch der Pufferlösung kontinuierlich erfolgt, indem die Hohlfasern des Hohlfasermembranmoduls vom Eluat aus der Flüssigchromatographieanlage durchströmt und im Gegenstrom von in Lösungsmitteln gelösten niedermolekularen Substanzen umspült werden.

3. Verfahren nach Anspruch 2, dadurch gekennzeichnet, daß das im Gegenstrom zum Eluat geführte Lösungsmittel spezifische niedermolekulare Substrate für die enzymatische Detektion enthält.

## Claims

1. Apparatus for producing and re-buffering and/or concentrating dissolved macromolecules of a macromolecule mixture, comprising a liquid chromatography installation and at least one hollow fibre membrane module arranged in the discharge flow line of the liquid chromatography installation, characterised in that the hollow fibre membrane module contains hollow fibres of semipermeable membranes which are impermeable to macromolecules but let through small molecules, and that the quotient of the number of said hollow fibres and the effective hollow fibre length does not exceed the value 0.5 mm⁻¹ and the inside diameter of a hollow fibre does not exceed the value 0.25 mm.

2. A method of producing and re-buffering and/or concentrating dissolved macromolecules of a macromolecule mixture using an apparatus according to claim 1 characterised in that removal and/or exchange of the buffer solution is effected continuously by a procedure whereby the eluate from the liquid chromatography installation flows through the hollow fibres of the hollow fibre membrane module and the hollow fibres are washed around in counter-flow relationship by low-molecular substances dissolved in solvents.

3. A method according to claim 2 characterised in that the solvent which is passed in counter-flow relationship with the eluate contains specific low-molecular substrates for enzymatic detection.

## Revendications

1. Dispositif pour la récupération et le tamponnage et/ou la concentration de macromolécules dissoutes dans un mélange macromoléculaire, se composant d'une installation de chromatographie en phase liquide et d'au moins un module à membrane de fibres creuses agencé dans la conduite d'évacuation de l'installation de chromatographie en phase liquide,
caractérisé en ce que le module à membrane en fibres creuses contient des fibres creuses en membranes semiperméables qui sont imperméables aux macromolécules mais laissent passer les petites molécules et en ce que le quotient du nombre de ces fibres creuses et de la longueur effective des fibres creuses ne dépasse pas la valeur de 0,5 mm⁻¹ et le diamètre interne d'une fibre creuse ne dépasse pas la valeur de 0,25 mm.

2. Procédé pour la récupération et le tamponnage et/ou la concentration de macromolécules dissoutes d'un mélange macromoléculaire en utilisant un dispositif selon la revendication 1 caractérisé en ce que l'extraction et/ou l'échange de la solution tampon se produit continuellement par le fait que les fibres creuses du module à membrane de fibres creuses sont traversées de l'éluat provenant de l'installation de chromatographie en phase liquide et sont rincées à contre-courant des substances à faible poids moléculaire dissoutes dans le solvant.

3. Procédé selon la revendication 2, caractérisé en ce que le solvant, guidé à contre-courant de l'éluat, contient un substrat spécifique de faible poids moléculaire pour la détection enzymatique.
